# EUROPEAN PATENT APPLICATION

(11) **EP 2 775 572 A1**
(43) Date of publication of application: **10.09.2014**
(21) Application number: 12846250.4
(22) Date of filing: 29.10.2012
(51) Int. Cl.: H01R 35/04

(54) **ROTARY CONNECTOR DEVICE**

(30) Priority: 31.10.2011 JP 2011239177
(71) Applicant: Furukawa Electric Co., Ltd., Chiyoda-ku Tokyo 100-8322 (JP); Furukawa Automotive Systems Inc., Inukami-gun, Shiga 522-0242 (JP)
(72) Inventor: ADACHI, Ryoichi, Inukami-gun, Shiga 5220242 (JP)
(74) Representative: Dantz, Jan Henning
(86) International application number: PCT/JP2012/077868
(87) International publication number: WO 2013/065633

(57) **Abstract**

A steering ring connector 10 includes a plurality of first rotatable rollers 43 provided on a top surface of a retainer 41, the plurality of first rotatable rollers 43 being located at a prescribed pitch in a circumferential direction of a phantom circle concentric with the retainer 41 and being axially supported by the retainer 41 so as to be rotatable; and a second rotatable roller 44 provided to face a part, of one of the plurality of first rotatable rollers 43, along which a reversed part Cr is wound, the second rotatable roller 44 being located away from the one first rotatable roller 43 by a distance which allows the reversed part Cr to be pressed to, and to be separated from the second rotatable roller 44, the one first rotatable roller 43 and being axially supported by the retainer 41 so as to be rotatable.

## Description

### TECHNICAL FIELD

The present invention relates to a rotatable connector device mountable on a vehicle such as an automobile or the like, and more specifically, to a rotatable connector device which is usable for electrically connecting a steering wheel and a vehicle body to each other by a flat cable and can significantly reduce abrasion of the flat cable.

### BACKGROUND ART

A conventionally known rotatable connector device includes a rotor member (rotator) fixed on the side of a steering shaft (steering wheel) and a stator member (stator) fixed on the side of a steering column (vehicle body) for rotatably accommodating the rotor member, and accommodates a band-like flexible flat cable in an accommodation space formed by the rotor member and the stator member such that the flat cable can be wound and rewound.

An example of rotatable connector device using the flat cable which has already been proposed (see Patent Document 1) has a structure in which a reversed part of the flat cable accommodated in an annular space is guided by a rotatable roller axially supported by a holder (retainer) and a guide wall projected in the vicinity of the rotatable roller.

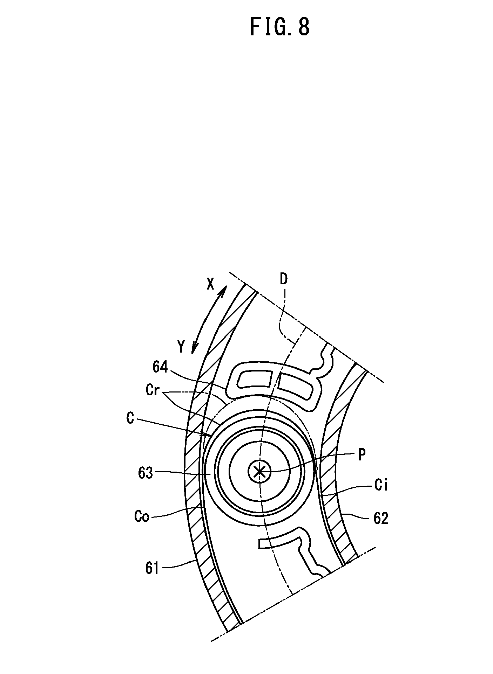

This will be described in more detail. As shown in FIG. 8, the flat cable C as described above is accommodated in the annular space in the state where an outside wound part Co of the flat cable C is wound along an inner circumferential surface of an outer cylinder 61 of a stator member and an inside wound part Ci of the flat cable C is wound along an outer circumferential surface of an inner cylinder 62 of a rotor member. A reversed part Cr of the flat cable C is wound along one of a plurality of rotatable rollers 63 axially supported by the holder. The rotatable roller 63 along which the reversed part Cr is wound is located on a reference line D passing an axial center P of each of the other rotatable rollers 63 which are located in a circumferential direction of a phantom circle concentric with the holder.

When the rotor member of the rotatable connection device is rotated clockwise, the reversed part Cr of the flat cable C is pressed to a guide wall 64 and the holder is rotated clockwise by the pressing force. When the rotor member is rotated counterclockwise, the reversed part Cr of the flat cable C pulls, counterclockwise, the rotatable roller 63 along which the flat cable C is wound and thus the holder is rotated counterclockwise.

According to the above-described structure, there is no inflection point in the outside wound part Co of the flat cable C wound along the inner circumferential surface of the outer cylinder 61, but there is an inflection point in the inside wound part Ci of the flat cable C wound along the outer circumferential surface of the inner cylinder 62. Therefore, the curvature change ratio of an area astride the inflection point of the inside wound part Ci gradually increases toward the downstream side and the upstream side with respect to the inflection point.

Therefore, while the rotor member is rotated clockwise, the reversed part Cr, which has a large curvature change ratio among various parts of the flat cable C, is restricted in the state of being pressed to a part of the guide wall 64 that is in the vicinity of an outer corner thereof, and the flat cable C is fed while the reversed part Cr thereof slides against the part of the guide wall 64 that is in the vicinity of the outer corner thereof.

Namely, the reversed part Cr of the flat cable C and the guide wall 64 are in a point contact or a line contact with each other. Therefore, a contact area of the reversed part Cr and the guide wall 64 is small. The reversed part Cr of the flat cable C slides while receiving a load (reaction force) from the retainer at a part thereof in a concentrated manner. For this reason, when the connector is rotated repeatedly, a laminate structure of the flat cable C is easily abraded, which may cause a fault.

### CITATION LIST

### PATENT LITERATURE

Patent Document 1: Japanese Laid-Open Patent Publication No. 2009-217974

### SUMMARY OF INVENTION

### TECHNICAL PROBLEM

The present invention made has an object of providing a rotatable connector device capable of significantly reducing such abrasion of a flat cable.

### SOLUTION TO PROBLEM

The present invention is directed to a rotatable connector device, including a rotator including an annular rotatable-side ring plate and an inner cylindrical section having a cylindrical shape and formed along an inner circumferential edge of the rotatable-side ring plate; and a stator including an annular fixed-side ring plate and an outer cylindrical section having a cylindrical shape and formed along an outer circumferential edge of the fixed-side ring plate. The stator and the rotator are in engagement with each other so as to be rotatable with respect to each other in a clockwise direction and a counterclockwise direction; and the rotatable-side ring plate and the inner cylindrical section of the rotator and the fixed-side ring plate and the outer cylindrical section of the stator form an accommodation space. The rotatable connector device may further include an annular retainer for supporting a plurality of rotatable rollers; a flat cable for electrically connecting the side of the rotator and the side of the stator to each other and including a reversed part, formed in a middle part in a length direction thereof, at which a winding direction of the flat cable is reversed, the flat cable being accommodated in the accommodation space such that the flat cable can be wound and rewound; a plurality of first rotatable rollers provided on a top surface of the retainer, the plurality of first rotatable rollers being located at a prescribed pitch in a circumferential direction of a phantom circle concentric with the retainer and being axially supported by the retainer so as to be rotatable; and a second rotatable roller provided to face a part, of one of the plurality of first rotatable rollers, along which the reversed part is wound, the second rotatable roller being located away from the one first rotatable roller by a distance which allows the reversed part to be pressed to, and to be separated from, the one first rotatable roller and being axially supported by the retainer so as to be rotatable.

The flat cable may be a band-like flexible transmission line including a plurality of flat conductors which are located parallel to each other at a predetermined pitch and are covered with an insulating cover. The flat cable may be a dummy cable with no flat conductor. One or a plurality of flat cables are wound around, and at least one flat cable is a transmission line.

According to the above-described structure, when the rotatable connector device is rotated in a direction in which the flat cable is unwound from the rotator (inner cylindrical section), the second rotatable roller is rotated by the pressing force of the reversed part. Therefore, the contact frictional resistance generated between the reversed part moving while being unwound from the circumferential surface of the first rotatable roller and the second rotatable roller can be suppressed. This can significantly reduce the abrasion of the reversed part (flat cable).

In an embodiment of the present invention, the second rotatable roller may have a diameter smaller than a diameter of each of the first rotatable rollers; and an axial center of the second rotatable roller may be located outer to a reference line passing axial centers of the plurality of first rotatable rollers.

According to the above-described structure, the second rotatable roller can be rotated with certainty, and thus the contact frictional resistance between the reversed part and the second rotatable roller can be suppressed with certainty.

This will be described in more detail. The inside wound part wound along the outer circumferential surface of the inner cylindrical section of the rotator has an inflection point. Owing to this, when the flat cable is unwound from the rotator (inner cylindrical section), the flat cable is fed outward in the radial direction (diametrically outer direction) from the inner cylindrical section. As a result, a tip of the reversed part is lopsided diametrically outward.

As described above, the second rotatable roller is formed to have a diameter smaller than that of each first rotatable roller, and the axial center of the second rotatable roller is located outer to the reference line. Owing to this, the reversed part having the tip lopsided diametrically outward can be put into contact with the second rotatable roller appropriately. As a result, the pressing force of the reversed part can be transmitted to the second rotatable roller with certainty. Owing to this, the second rotatable roller can be rotated with certainty, and the contact frictional resistance between the reversed part and the second rotatable roller can be suppressed with more certainty.

In an embodiment of the present invention, the rotatable connector device may further include a diametrically inner restriction section for preventing the reversed part from entering a gap between the inner cylindrical section of the rotator and the second rotatable roller.

According to the above-described structure, the reversed part can be prevented from entering a large gap formed between the inner cylindrical section of the rotator and the second rotatable roller by the axial center of the second rotatable roller being located outer to the reference line. Thus, the electric characteristics of the flat cable can be prevented from being damaged.

This will be described in more detail. Since the axial center of the second rotatable roller is located outer to the reference line, a large gap is formed between the inner cylindrical section and the second rotatable roller. Therefore, if the retainer, for some reason, is not rotated smoothly along the rotation of the rotator and as a result, the reversed part is slackened, the slackened part can easily enter the gap between the inner cylindrical section and the second rotatable roller.

If the slackened part enters the gap, the slackened part is folded and may damage the electric characteristics of the flat cable.

As described above, the diametrically inner restriction section is provided between the inner cylindrical section of the rotator and the second rotatable roller. Owing to this, the reversed part can be prevented from entering the large gap formed between the inner cylindrical section and the second rotatable roller by the axial center of the second rotatable roller being located outer to the reference line. Thus, the electric characteristics of the flat cable can be prevented from being damaged.

In an embodiment of the present invention, the diametrically inner restriction section may be located in an area defined between a phantom line passing an axial center of the retainer and the axial center of the second rotatable roller and a phantom circle contacting the inner cylindrical section of the rotator, the outer cylindrical section of the stator and the second rotatable roller.

According to the above-described structure, the reversed part can be prevented with certainty from entering the gap between the inner cylindrical section of the rotator and the second rotatable roller. In addition, the restriction section can be prevented with certainty from being inadvertently contacting the reversed part while the flat cable is unwound from the rotator (inner cylindrical section) smoothly. Therefore, the abrasion of the reversed part, which would be otherwise caused by the contact with the restriction section, is prevented while the smooth movement of the reversed part is guaranteed.

In an embodiment of the present invention, the rotatable connector device may further include a diametrically outer restriction section for preventing the reversed part from entering a gap between the outer cylindrical section of the stator and the second rotatable roller.

According to the above-described structure, the reversed part can be prevented from entering a gap formed between the outer cylindrical section of the stator and the second rotatable roller, and thus the electric characteristics of the flat cable can be prevented from being damaged.

This will be described in more detail. If the retainer cannot rotate smoothly along the rotation of the rotator and as a result, the reversed part is significantly slackened, this slackened part may undesirably enter a gap between the outer cylindrical section and the second rotatable roller. If the slackened part of the reversed part enters the gap, the slackened part is folded and may damage the electric characteristics of the flat cable.

As described above, the diametrically outer restriction section is provided between the outer cylindrical section of the stator and the second rotatable roller. Owing to this, the reversed part can be prevented from entering the gap formed between the outer cylindrical section and the second rotatable roller, and thus the electric characteristics of the flat cable can be prevented from being damaged.

In an embodiment of the present invention, the diametrically outer restriction section may be located in an area defined between a phantom line passing an axial center of the retainer and the axial center of the second rotatable roller and a tangential line passing the axial center of the retainer and contacting the second rotatable roller.

According to the above-described structure, the reversed part can be prevented with certainty from entering the gap between the outer cylindrical section of the stator and the second rotatable roller. In addition, the restriction section can be prevented with certainty from being inadvertently contacting the reversed part while the flat cable is unwound from the rotator (inner cylindrical section) smoothly. Therefore, the abrasion of the reversed part, which would be otherwise caused by the contact with the restriction section, is prevented while the smooth movement of the reversed part is guaranteed.

In an embodiment of the present invention, the rotatable connector device may further include an inter-roller restriction section provided on the top surface of the retainer and located between the plurality of first rotatable rollers. The diametrically inner restriction section and the diametrically outer restriction section may be integral with the inter-roller restriction section.

According to the above-described structure, a function of preventing the reversed part from entering the gap between the inner cylindrical section of the rotator and the second rotatable roller the gap between the outer cylindrical section of the stator and the second rotatable roller, and a function of guiding the outside wound part wound along the inner circumferential surface of the outer cylindrical section and the inside wound part wound along the outer circumferential surface of the inner cylindrical section, can be both provided by the same element. This can simplify the structure of the retainer.

In an embodiment of the present invention, the inter-roller restriction section may be shaped to be along the second rotatable roller and may be located to surround the second rotatable roller.

According to the above-described structure, foreign objects such as sand, dust or the like can be prevented from being attached to an outer circumferential surface of the second rotatable roller. Therefore, the inconvenience is avoided that the foreign objects attached to the outer circumferential surface of the second rotatable roller are transported by the rotation of the second rotatable roller to the contact part of the reversed part and the second rotatable roller. Therefore, increase in the contact frictional resistance, which would otherwise be caused by the presence of the foreign objects, can be suppressed with certainty.

### ADVANTAGEOUS EFFECTS OF INVENTION

According to the present invention, a rotatable connector device capable of significantly reducing abrasion of a flat cable can be provided.

### BRIEF DESCRIPTION OF DRAWINGS

[FIG. 1] FIG. 1 is an external isometric view of a steering roll connector in an embodiment.
[FIG. 2] FIG. 2 is an exploded isometric view of the steering roll connector in the embodiment.
[FIG. 3] FIG. 3 is a plan view showing the steering roll connector in the state where a rotator is detached.
[FIG. 4] FIG. 4 is a cross-sectional view taken along line A-A in FIG. 1.
[FIG. 5] FIG. 5 is an enlarged cross-sectional view showing a part of FIG. 4.
[FIG. 6] FIG. 6 is an enlarged view of an important part which shows a second rotatable roller and the vicinity thereof.
[FIG. 7] FIG. 7 shows an operation of a reversed part of a flat cable and the second rotatable roller in the embodiment.
[FIG. 8] FIG. 8 shows an operation of a reversed part of a conventional flat cable.

### DESCRIPTION OF EMBODIMENTS

An embodiment of the present invention will be described with reference to the drawings.

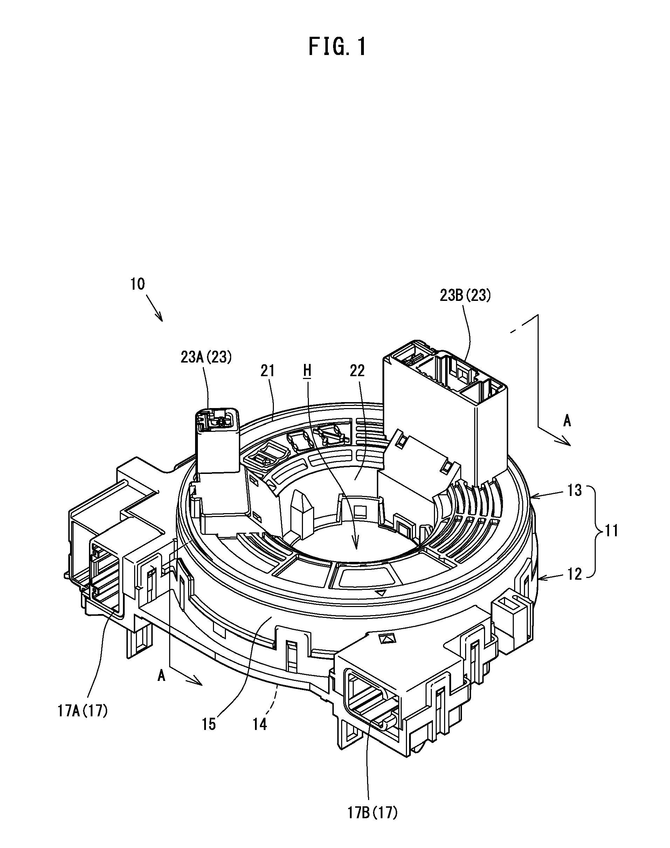

As shown in FIG. 1 through FIG. 5, a steering roll connector 10 (SRC 10) in this embodiment includes a cable housing 11, a retainer 41, and a rotatable lock unit 51.

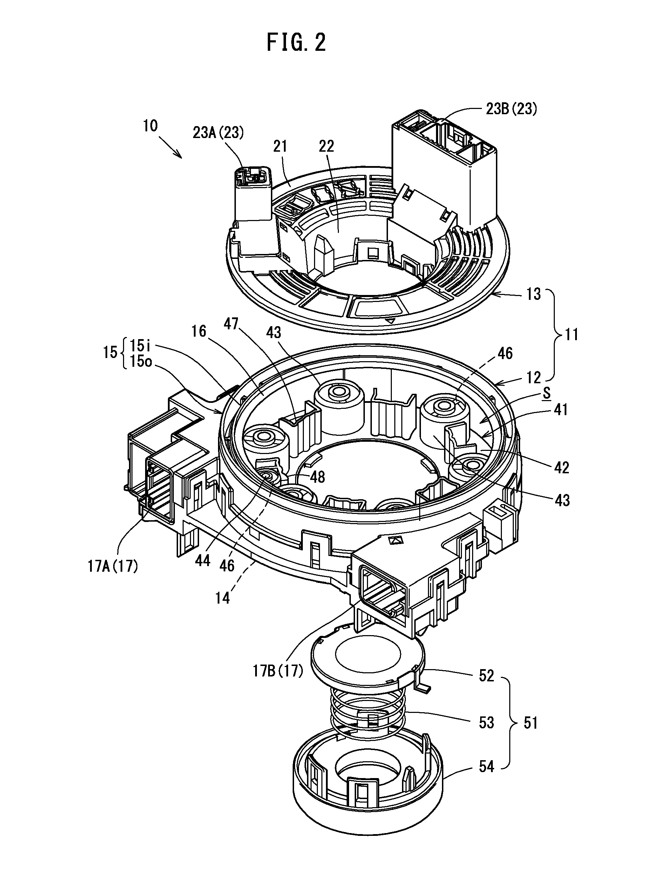

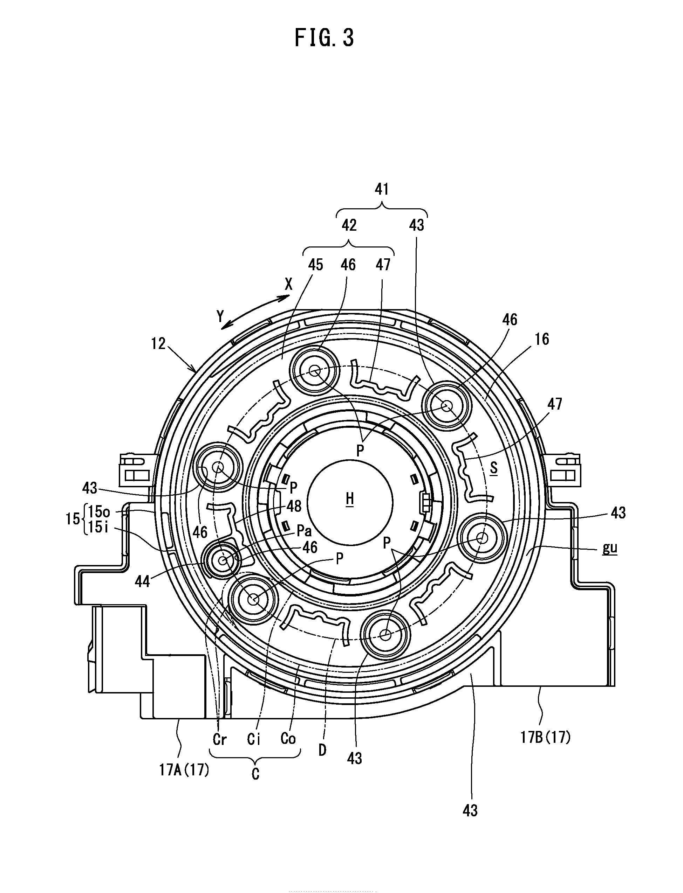

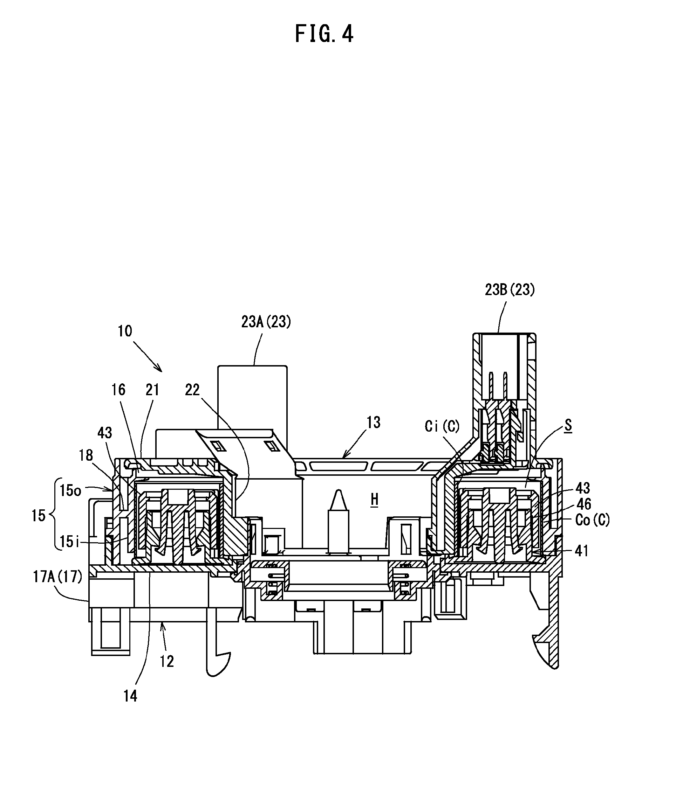

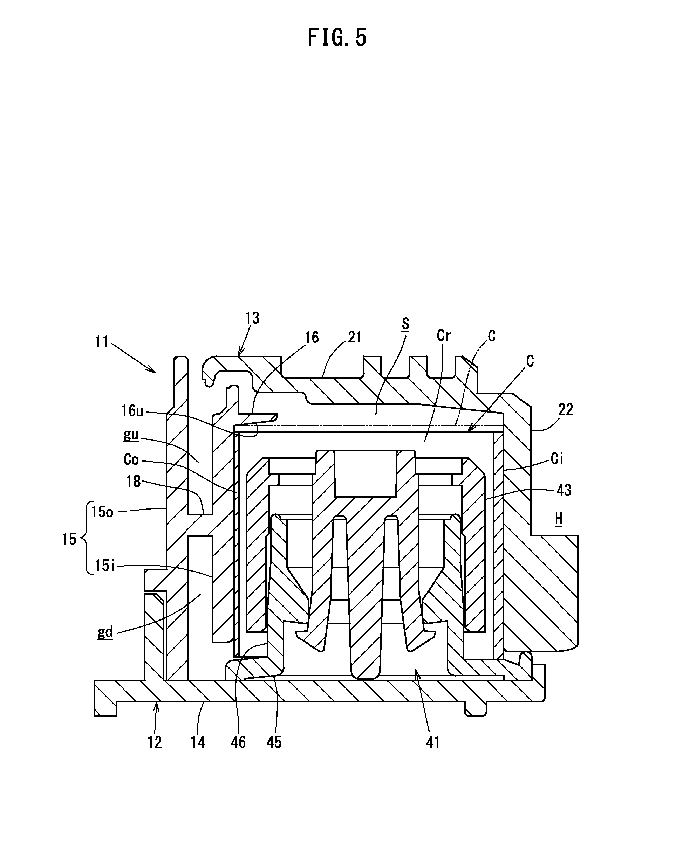

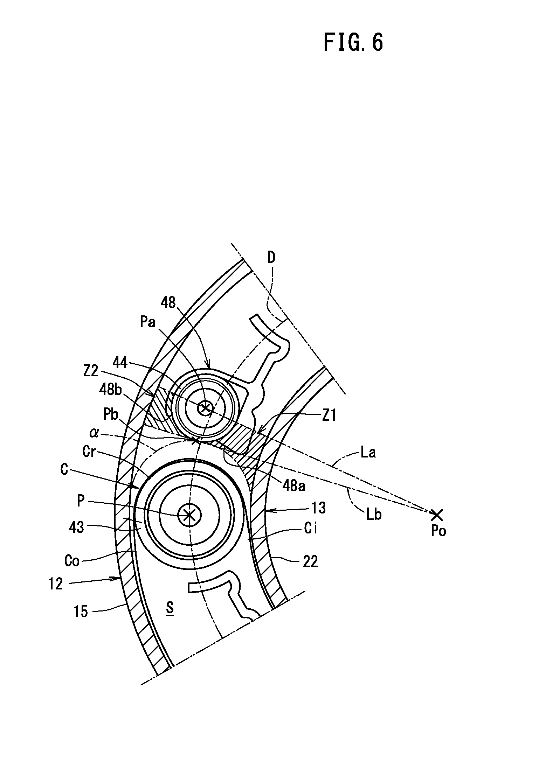

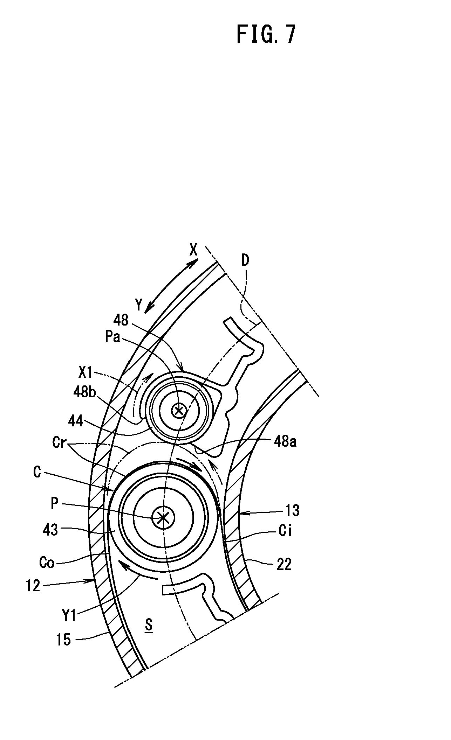

FIG. 1 and FIG. 2 are respectively an external isometric view and an exploded isometric view of the steering roll connector 10. FIG. 3 is a plan view of the steering roll connector 10 in the state where a rotator 13 described later is detached. FIG. 4 is a cross-sectional view taken along line A-A. FIG. 5 is an enlarged cross-sectional view of a part of FIG. 4. FIG. 6 is an enlarged view of an important part which shows a second rotatable roller 44 and the vicinity thereof. FIG. 7 shows an operation of a reversed part Cr of flat cables C and the second rotatable roller 44.

The cable housing 11 has a generally cylindrical shape having an insertion hole H at a central part thereof as seen in a plan view thereof. The insertion hole H runs through the cable housing 11 in an axial direction thereof. The insertion hole H has a diameter which allows a steering shaft supported by a steering column (not shown) to be inserted into the insertion hole H.

A steering wheel for performing a rotation operation is fixed to a top end of the steering shaft.

The cable housing 11 includes a stator 12 and a rotator 13 engaged with each other so as to be rotatable with respect to each other. As shown in FIG. 2 through FIG. 5, the cable housing 11 has an accommodation space S therein for accommodating the flexible flat cables C (hereinafter, referred to as the "flat cables C") in the state where the flat cables C are wound appropriately.

The flat cables C are each a band-like flexible transmission line including a plurality of flat conductors which are located parallel to each other at a predetermined pitch and are covered with an insulating cover.

The accommodation space S is formed by a fixed-side ring plate 14 and an outer cylindrical section 15 of the stator 12 and a rotatable-side ring plate 21 and an inner cylindrical section 22 of the rotator 13. The stator 12 and the rotator 13 are rotatable with respect to each other.

The stator 12 is fixed to an appropriate component on the side of the vehicle body, for example, a combination bracket switch (not shown) of the steering column.

The stator 12 includes the fixed-side ring plate 14 formed to have an annular shape as a bottom plate and an outer cylindrical section 15 having a cylindrical shape and extending vertically from an outer circumferential edge of the fixed-side ring plate 14. The outer circumferential edge of the fixed-side ring plate 14 and a bottom end of the outer cylindrical section 15 are engaged with each other to be integral.

As shown in FIG. 4 and FIG. 5, the outer cylindrical section 15 has a two-layer structure including an outer-side outer cylindrical section 15o having a cylindrical shape and an inner-side outer cylindrical section 15i having a cylindrical shape. The inner-side outer cylindrical section 15i has a diameter slightly shorter than a diameter of the outer-side outer cylindrical section 15o and is formed inner to the outer-side outer cylindrical section 15o. The outer-side outer cylindrical section 15o and the inner-side outer cylindrical section 15i are located concentrically and face each other in a radial direction closely to each other.

The outer-side outer cylindrical section 15o and the inner-side outer cylindrical section 15i are integrated together by being coupled to each other by a coupling section 18 at an intermediate part thereof in an axial direction of the steering wheel (up-down direction in FIG. 4 and FIG. 5). A radial-direction gap provided between the outer-side outer cylindrical section 15o and the inner-side outer cylindrical section 15i is divided into an upper part and a lower part by the coupling section 18. Thus, as shown in FIG. 5, two grooves gu and gd opened upward and downward are formed.

The groove gu opened upward is continuous in the circumferential direction along the outer-side outer cylindrical section 15o or the inner-side outer cylindrical section 15i while being centered around an axis of the stator 12.

As shown in FIG. 5, the inner-side outer cylindrical section 15i has a brim-like guide projection piece 16 in a top portion thereof. The guide projection piece 16 projects inward in the radial direction (radially inner direction) toward the accommodation space S at a position above the flat cables C wound around in the accommodation space S and guides the flat cables C from above.

As seen in a plan view, the guide projection piece 16 is formed along an inner circumferential edge of the top part of the inner-side outer cylindrical section 15i and projects straight toward the accommodation space S. A bottom surface 16u of the guide projection piece 16 has a tapering shape such that the bottom surface 16u inclines upward as approaching an inner end thereof in the radial direction.

The stator 12 is provided with stator-side connectors 17 (see FIG. 2).

The stator-side connectors 17 include a first stator-side connector 17A and a second stator-side connector 17B. The first stator-side connector 17A and the second stator-side connector 17B are located outer to the outer cylindrical section 15 such that a prescribed distance is kept therebetween and connection openings thereof are directed in the same direction.

The stator-side connectors 17 are each connected to a cable (not shown) drawn from an electrical circuit or the like on the vehicle body side in a lower column cover (not shown).

The rotator 13 includes the rotatable-side ring plate (top plate) 21 formed to be annular, and the inner cylindrical section 22 having a cylindrical shape and extending vertically from an inner circumferential edge of the rotatable-side ring plate 21.

The rotator 13 is fixed to, and is rotatable integrally with, the steering wheel (not shown). Therefore, the rotator 13 can rotate with respect to the stator 12 around the same axis as the rotation axis of the steering wheel.

The rotatable-side ring plate 21 is located to face the fixed-side ring plate 14 in a direction of a rotation axis of the rotator 13.

The inner cylindrical section 22 is located to face the outer cylindrical section 15 in the radial direction.

The rotator 13 is provided with rotator-side connectors 23 rotatable along the rotation of, and integrally with, the rotator 13.

The rotator-side connectors 23 include a first rotator-side connector 23A and a second rotator-side connector 23B.

The rotator-side connectors 23 are each connected to a cable (not shown) drawn from an electrical circuit of, for example, a horn switch, an airbag unit or the like in the steering wheel.

The first rotator-side connector 23A and the first stator-side connector 17A are electrically connected to each other by one of the flat cables C located in the accommodation space S, and the second rotator-side connector 23B and the second stator-side connector 17B are electrically connected to each other by the other flat cable C located in the accommodation space S.

The retainer 41 includes a base ring 42, a plurality of first rotatable rollers 43 and the second rotatable roller 44, and is rotatable in the accommodation space S as being centered around the rotation axis of the rotator 13.

The plurality of first rotatable rollers 43 are located at a prescribed pitch in a circumferential direction of a phantom circle concentric with the retainer 41. The first rotatable rollers 43 are respectively supported by roller supporting projection sections 46 described later, and are each rotatable as being centered around an axis parallel to the rotation axis of the rotator 13.

The second rotatable roller 44 is located to guide a folded part of each flat cable C that is folded along one of the first rotatable rollers 43 (the folded part is the reversed part Cr described later). The second rotatable roller 44 guides the folded part C from the diametrically outer side.

This will be described in more detail. The second rotatable roller 44 is located on the downstream side in a clockwise direction X with respect to the first rotatable roller 43 along which the reversed part Cr is wound, namely, is located to face the reversed part Cr wound along the first rotatable roller 43. Moreover, the second rotatable roller 44 is located away from the first rotatable roller 43 by a distance which allows the reversed part Cr to contact and to be separated from the first rotatable roller 43.

The second rotatable roller 44 is axially supported by the roller supporting projection section 46 and is rotatable as being centered around an axis parallel to the rotation axis of the rotator 13, like the first rotatable rollers 43. FIG. 4 and FIG. 5 each show an example of cross-sectional structure of the first rotatable roller(s), and do not show a cross-sectional structure of the second rotatable roller 44 for the sake of convenience. The cross-sectional structure of the second rotatable roller 44 is generally the same as the cross-sectional structure shown in FIG. 4 and FIG. 5.

The second rotatable roller 44 has a diameter smaller than a diameter of each of the first rotatable rollers 43 located in a circumferential direction concentric with the retainer 41. The second rotatable roller 44 is located such that an axial center Pa thereof is outer to the circular reference line D passing an axial center P of each of the plurality of first rotatable rollers 43 (see FIG. 3).

The base ring 42 includes a plate-like base ring main body 45 which is annular as seen in a plan view, the roller supporting projection sections 46, and restriction sections 47 and 48.

The base ring main body 45 is located on the fixed-side ring plate 14 and is rotatable with respect to the stator 12.

The plurality of roller supporting projection sections 46 are located in the circumferential direction of the base ring main body 45 and project upward to axially support the first and second rotatable rollers 43 and 44.

The restriction sections 47 and 48 are located between the first rotatable rollers 43 axially supported by the retainer 41. The restriction section 48 is located on the downstream side in the clockwise direction X with respect to the first rotatable roller 43 along which the reversed part Cr is wound, at a position away from the first rotatable roller 43 by a prescribed distance.

The restriction sections 47 and 48 project upward from the base ring main body 45, and is located to guide outside wound parts Co (described later) which are wound outside the first rotatable rollers 43 and along the inner circumferential surface of the outer cylindrical section 15 (inner-side outer cylindrical section 15i) of the stator 15 and also to guide inside wound parts Ci (described later) which are wound inside the first rotatable rollers 43 and along the outer circumferential surface of the inner cylindrical section 22 of the rotator 13.

The restriction sections 47 are each formed to have a wall shape which is curved with a curvature equal to or larger than that of a circumferential surface of the first rotatable rollers 43.

By contrast, the restriction section 48 has the following shape. A part on one end is formed to have a wall shape which is curved with a curvature equal to or larger than that of the circumferential surface of the first rotatable rollers 43, like the restriction sections 47. A part on the other end is formed to have a wall shape surrounding the second rotatable roller 44.

The part on the other end of the restriction section 48 is divided into two, namely, an outer part and an inner part, so as to be along the shape of the second rotatable roller 44. The part on the other end has a diametrically inner restriction part 48a for preventing the reversed part Cr from entering a gap between the second rotatable roller 44 and the inner cylindrical section 22 of the rotator 13, and also includes a diametrically outer restriction part 48b for preventing the reversed part Cr from entering a gap between the second rotatable roller 44 and the outer cylindrical section 15 (inner-side outer cylindrical section 15i) of the stator 12. The diametrically inner restriction part 48a and the diametrically outer restriction part 48b are integral with the restriction section 48.

As shown in FIG. 6, the diametrically inner restriction part 48a integral with the restriction section 48 is located in a hatched area Z1, which is defined between a phantom line La passing an axial center Po of the retainer 41 and the axial center Pa of the second rotatable roller 44 and a phantom circle (in FIG. 6, represented with an arc) contacting the inner cylindrical section 22 of the rotator 13, the outer cylindrical section 15 (inner-side outer cylindrical section 15i) of the stator 12 and the second rotatable roller 44.

The diametrically outer restriction part 48b integral with the restriction section 48 is located in a hatched area Z2, which is defined between the phantom line La and a tangential line Lb which passes the axial center Po of the retainer 41 and contacts the second rotatable roller at a point of contact Pb.

As shown in FIG. 2, the rotation lock unit 51 includes a lock body 52, a spring bearing sleeve 54, and a return spring 53 provided between the lock body 52 and the spring bearing sleeve 54.

By pressing up the spring bearing sleeve 54 against an urging force of the return spring 53, the rotator 13 can be locked by the lock body 52 so as not to be rotated with respect to the stator 12. Alternatively, by inserting a boss section (not shown) of a core bar of the steering wheel into the rotation lock unit 51, the rotator 13 can be released from the locked state provided by the lock body 52 and is permitted to be freely rotatable with respect to the stator 12.

Regarding the flat cables C, two flat cables C are wound around in the accommodated space S in a layered state. One of the two layered flat cables C is connected to the first stator-side connector 17A at one end in a length direction thereof and is connected to the first rotator-side connector 23A at the other end.

The other of the two layered flat cables C is connected to the second stator-side connector 17B at one end in the length direction thereof and is connected to the second rotator-side connector 23B at the other end.

Such flat cables C are supported by the retainer 41 located to be rotatable with respect to the fixed-side ring plate 14 and is accommodated in a wound state in the accommodation space S in the cable housing 11.

This will be described in more detail. The flat cables C are drawn into the accommodation space S from the first stator-side connector 17A and the second stator-side connector 17B respectively. As shown in FIG. 3 through FIG. 5, the outside wound parts Co are formed which are wound along the inner circumferential surface of the outer cylindrical section 15 (inner-side outer cylindrical section 15i) of the stator 12 at a position outer to the first rotatable rollers 43. The outside wound parts Co have no inflection point.

Thus, a base end of each outside wound part Co is fixed at the position of the corresponding stator-side connector 17.

The two flat cables C are wound around in the accommodated space S in a layered state as described above, but in FIG. 4 and FIG. 5, such a structure is simplified and only one wound flat cable C is shown.

As represented by the two-dot chain line in FIG. 3, the flat cables C have the reversed part Cr in the middle thereof in the length direction. The reversed part Cr is turned around in a U shape and wound along one of the plurality of rotatable rollers 43.

After this part, the other ends of the flat cables C in the length direction are each formed to be the inside wound part Ci which is wound along the outer circumferential surface of the inner cylindrical section 22 of the rotator 13 at a position inner to the retainer 41. The inside wound parts Ci have an inflection point.

The flat cables C are finally drawn out of the accommodation space S and connected to the first rotator-side connector 23A and the second rotator-side connector 23B, respectively.

Thus, the base end of each inside wound part Ci is fixed at a position of the corresponding rotator-side connector 23.

As described above, in the accommodation space S, a part of each flat cable C between the inside wound part Ci and the outside wound part Co is wound or unwound by the rotation of the rotator 13 and the stator 12 with respect to each other.

An operation of winding and unwinding the flat cables C by the steering roll connector 10 described above will be described.

While the flat cables C are wound and unwound, the reversed part Cr is appropriately rotated together with the retainer 41 so as to follow a change of balance in the winding state between the outside wound parts Co and the inside wound parts Ci.

Owing to this, the steering roll connector 10 can keep the flat cables C as being wound in an aligned manner in the accommodation space S, and also allows the steering wheel to be rotated smoothly.

This will be described in more detail. When the rotator 13 is rotated in the clockwise direction X shown in FIG. 3 and FIG. 7, the reversed part Cr of the flat cables C having one ends fixed to the rotator 13 is moved in the clockwise direction X in the circumferential direction of the retainer 41 while being unwound from the circumferential surface of the first rotatable roller 43.

As a result of this movement, as represented by the two-dot chain line in FIG. 7, the reversed part Cr of the flat cables C is pressed to the second rotatable roller 44. At this point, the second rotatable roller 44 is rotated in a clockwise direction X1 by a pressing force caused by the reversed part Cr being pressed thereto and is also pressed in the circumferential direction of the retainer 41. Thus, the retainer 41 is rotated in the clockwise direction X.

By contrast, when the rotator 13 is rotated in a counterclockwise direction Y shown in FIG. 3 and FIG. 7, the reversed part Cr of the flat cables C having one ends fixed to the rotator 13 is moved in the counterclockwise direction Y in the circumferential direction of the retainer 41.

As a result of this movement, as represented by the solid line in FIG. 7, the reversed part Cr of the flat cables C pulls, in the counterclockwise direction Y, the first rotatable roller 43 along which the reversed part Cr is wound. Thus, the first rotatable roller 43 is rotated in a counterclockwise direction Y1 and the retainer 41 is rotated in the counterclockwise direction Y.

At this point, the reversed part Cr of the flat cables C is moved together with the first rotatable roller 43 in the same direction with the first rotatable roller 43 with no contact with the second rotatable roller 44.

In this embodiment, as described above, the second rotatable roller 44 axially supported by the retainer 41 so as to be rotatable is provided. Owing to this, when the steering roll connector 10 is rotated in the clockwise direction X in which the flat cables C are unwound from the rotator 13 (inner cylindrical section 22), the second rotatable roller 44 is rotated by the pressing force of the reversed part Cr. Therefore, the contact frictional resistance generated between the reversed part Cr moving while being unwound from the circumferential surface of the first rotatable roller 43 and the second rotatable roller 44 can be suppressed. This can significantly reduce the abrasion of the reversed part Cr (flat cables C).

Even when foreign objects such as sand, dust or the like enter the contact part of the reversed part Cr and the second rotatable roller 44, the foreign objects can be discharged from the contact part by the rotation of the second rotatable roller 44. Therefore, increase in the contact frictional resistance caused by the presence of the foreign objects can be suppressed.

The inside wound parts Ci have an inflection point. Owing to this, when the rotator 13 is rotated in the clockwise direction X and the flat cables C are unwound from the rotator 13 (inner cylindrical section 22), the flat cables C are fed outward in the radial direction (diametrically outer direction) from the inner cylindrical section 22. As a result, a tip of the reversed part Cr is lopsided diametrically outward, namely, is located outer to the tip of the phantom circle α shown in FIG. 6 (see the reversed part Cr represented by the two-dot chain line in FIG. 3 and FIG. 7).

In order to avoid this, in this embodiment, the second rotatable roller 44 is formed to have a diameter smaller than that of each first rotatable roller 43, and the axial center Pa of the second rotatable roller 44 is located outer to the reference line D. Since the axial center Pa of the second rotatable roller 44 is located outer in this manner, the reversed part Cr having the tip lopsided diametrically outward can be put into contact with the second rotatable roller 44 appropriately. As a result, the pressing force of the reversed part Cr can be transmitted to the second rotatable roller 44 with certainty. Owing to this, the second rotatable roller 44 can be rotated with certainty, and the contact frictional resistance between the reversed part Cr and the second rotatable roller 44 can be suppressed with more certainty.

However, since the axial center Pa of the second rotatable roller 44 is located outer to the reference line D, a large gap is formed between the inner cylindrical section 22 and the second rotatable roller 44. This causes the following problem if the retainer 41, for some reason, is not rotated smoothly along the rotation of the rotator 13 and as a result, the reversed part Cr is slackened.

The problem will be described in detail. The slackened part can easily enter a gap between the inner cylindrical section 22 and the second rotatable roller 44. If the slackened part of the reverse part Cr enters the gap, the slackened part is folded and may damage the electric characteristics of the flat cables C.

In order to avoid this, in this embodiment, the diametrically inner restriction section 48a is provided between the inner cylindrical section 22 of the rotator 13 and the second rotatable roller 44. Owing to this, the reversed part Cr can be prevented from entering the large gap formed between the inner cylindrical section 22 and the second rotatable roller 44 by the axial center Pa of the second rotatable roller 44 being located outer to the reference line D. Thus, the electric characteristics of the flat cables C can be prevented from being damaged.

The diametrically inner restriction section 48a is located in the area Z1, which is defined between the phantom line La passing the axial center Po of the retainer 41 and the axial center Pa of the second rotatable roller 44 and the phantom circle α contacting the inner cylindrical section 22 of the rotator 13, the outer cylindrical section 15 (inner-side outer cylindrical section 15i) of the stator 12 and the second rotatable roller 44. This can prevent, with certainty, the reversed part Cr from entering the gap between the inner cylindrical section 22 and the second rotatable roller 44. In addition, the diametrically inner restriction section 48a can be prevented with certainty from being inadvertently contacting the reversed part Cr while the flat cables C are unwound from the rotator 13 (inner cylindrical section 22) smoothly. Therefore, the abrasion of the reversed part Cr, which would be otherwise caused by the contact with the diametrically inner restriction section 48a, is prevented while the smooth movement of the reversed part Cr is guaranteed.

If the retainer 41 cannot rotate smoothly along the rotation of the rotator 13 and as a result, the reversed part Cr is significantly slackened, this slackened part may undesirably enter a gap between the outer cylindrical section 15 (inner-side outer cylindrical section 15i) and the second rotatable roller 44. If the slackened part of the reversed part Cr enters the gap, the slackened part is folded and may damage the electric characteristics of the flat cables C.

In order to avoid this, in this embodiment, the diametrically outer restriction section 48b is provided between the outer cylindrical section 15 (inner-side outer cylindrical section 15i) of the stator 12 and the second rotatable roller 44. Owing to this, the reversed part Cr can be prevented from entering the gap formed between the outer cylindrical section 15 (inner-side outer cylindrical section 15i) and the second rotatable roller 44, and thus the electric characteristics of the flat cables C can be prevented from being damaged.

The diametrically outer restriction section 48b is located in the area Z2, which is defined between the phantom line La passing the axial center Po of the retainer 41 and the axial center Pa of the second rotatable roller 44 and the tangential line Lb which passes the axial center Po of the retainer 41 and contacts the second rotatable roller 44 at the point of contact Pb. This can prevent, with certainty, the reversed part Cr from entering the gap between the outer cylindrical section 15 (inner-side outer cylindrical section 15i) and the second rotatable roller 44. In addition, the diametrically outer restriction section 48b can be prevented with certainty from being inadvertently contacting the reversed part Cr while the flat cables C are unwound from the rotator 13 (inner cylindrical section 22) smoothly. Therefore, the abrasion of the reversed part Cr, which would be otherwise caused by the contact with the diametrically outer restriction section 48b, is prevented while the smooth movement of the reversed part Cr is guaranteed.

Now, the areas Z1 and Z2 will be compared. As shown in FIG. 6, an end of the area Z2, on the reversed part Cr side, corresponding to the diametrically outer restriction section 48b is set to be farther from the reversed part Cr than an end of the area Z1, on the reversed part Cr side, corresponding to the diametrically inner restriction section 48a. Owing to this, in this embodiment, while the flat cables C are unwound from the rotator 13 (inner cylindrical section 22), even if the tip of the reversed part Cr is lopsided diametrically outward as described above, the contact of the reversed part Cr and each of the restriction sections 48a and 48b can be prevented with certainty.

In this embodiment, the restriction sections 48a and 48b are each formed integrally with the restriction section 48 which is located between the plurality of first rotatable rollers 43. Therefore, a function of preventing the reversed part Cr from entering the gap between the inner cylindrical section 22 and the second rotatable roller 44 and the gap between the outer cylindrical section 15 (inner-side outer cylindrical section 15i) and the second rotatable roller 44, and a function of guiding the outside wound parts Co and the inside wound parts Ci, can be both provided by the restriction section 48. This can simplify the structure of the retainer 41.

The restriction section 48 is shaped to be along the second rotatable roller 44 and is located to surround the second rotatable roller 44. This can prevent foreign objects such as sand, dust or the like from being attached to an outer circumferential surface of the second rotatable roller 44. Therefore, the inconvenience is avoided that the foreign objects attached to the outer circumferential surface of the second rotatable roller 44 are transported by the rotation of the second rotatable roller 44 to the contact part of the reversed part Cr and the second rotatable roller 44. Therefore, increase in the contact frictional resistance, which would otherwise be caused by the presence of the foreign objects, can be suppressed with certainty.

In the above-described embodiment, the diametrically inner restriction section 48a and the diametrically outer restriction section 48b are formed integrally with the restriction section 48 provided between the first rotatable rollers 43. Alternatively, according to the present invention, the diametrically inner restriction section 48a and the diametrically outer restriction section 48b may be formed as different members.

According to the present invention, in order to increase the pressing force of the reversed part Cr on the second rotatable roller 44, namely, the rotation force of the second rotatable roller 44, a flat cable with no flat conductor (dummy cable) may be additionally accommodated together with the flat cables C.

According to the present invention, the diameter ratio between the first and second rotatable rollers 43 and 44 is not limited to that as shown in FIG. 6 or FIG. 7. The diameter of the second rotatable roller 44 is not limited to being smaller than that of each of the first rotatable rollers 43. Therefore, the axial center Pa of the second rotatable roller 44 is not limited to being located outer to the reference line D as is in the above-described embodiment, and the axial center Pa of the second rotatable roller 44 may be located inner to the reference D depending on the diameter ratio or the positional relationship between the first and second rotatable rollers 43 and 44.

The first and second rotatable rollers 43 and 44 are not limited to being cylindrical as shown in the figures, and may have a shape of, for example, a polygonal prism.

The rotatable connector device according to the present invention corresponds to the steering roll connector 10 in the embodiment; and
the inter-roller restriction section corresponds to the restriction section 48.
However, the present invention is not limited to the above-described embodiment, and can be carried out in many other embodiments.

### REFERENCE SIGNS LIST

X ... Clockwise direction
Y ... Counterclockwise direction
C ... Flat cable
Cr ... Reversed part
La, Lb ... Phantom line
S ... Accommodation space
Z1, Z2 ... Area
α ... Phantom circle
10 ... Steering roll connector
11 ... Cable housing
12 ... Stator
13 ... Rotator
15 ... Outer cylindrical section
22 ... Inner cylindrical section
41 ... Retainer
43 ... First rotatable roller
44 ... Second rotatable roller
47, 48 ... Restriction section
48a ... Diametrically inner restriction section
48b ... Diametrically outer restriction section

## Claims

1. A rotatable connector device, comprising:
a rotator including an annular rotatable-side ring plate and an inner cylindrical section having a cylindrical shape and formed along an inner circumferential edge of the rotatable-side ring plate; and
a stator including an annular fixed-side ring plate and an outer cylindrical section having a cylindrical shape and formed along an outer circumferential edge of the fixed-side ring plate;
wherein the stator and the rotator are in engagement with each other so as to be rotatable with respect to each other in a clockwise direction and a counterclockwise direction; and the rotatable-side ring plate and the inner cylindrical section of the rotator and the fixed-side ring plate and the outer cylindrical section of the stator form an accommodation space;
the rotatable connector device further comprising:
an annular retainer for supporting a plurality of rotatable rollers;
a flat cable for electrically connecting the side of the rotator and the side of the stator to each other and including a reversed part, formed in a middle part in a length direction thereof, at which a winding direction of the flat cable is reversed, the flat cable being accommodated in the accommodation space such that the flat cable can be wound and rewound;
a plurality of first rotatable rollers provided on a top surface of the retainer, the plurality of first rotatable rollers being located at a prescribed pitch in a circumferential direction of a phantom circle concentric with the retainer and being axially supported by the retainer so as to be rotatable; and
a second rotatable roller provided to face a part, of one of the plurality of first rotatable rollers, along which the reversed part is wound, the second rotatable roller being located away from the one first rotatable roller by a distance which allows the reversed part to be pressed to, and to be separated from, the one first rotatable roller and being axially supported by the retainer so as to be rotatable.

2. A rotatable connector device according to claim 1, wherein:
the second rotatable roller has a diameter smaller than a diameter of each of the first rotatable rollers; and
an axial center of the second rotatable roller is located outer to a reference line passing axial centers of the plurality of first rotatable rollers.

3. A rotatable connector device according to claim 2, further comprising a diametrically inner restriction section for preventing the reversed part from entering a gap between the inner cylindrical section of the rotator and the second rotatable roller.

4. A rotatable connector device according to claim 3, wherein the diametrically inner restriction section is located in an area defined between a phantom line passing an axial center of the retainer and the axial center of the second rotatable roller and a phantom circle contacting the inner cylindrical section of the rotator, the outer cylindrical section of the stator and the second rotatable roller.

5. A rotatable connector device according to claim 3 or 4, further comprising a diametrically outer restriction section for preventing the reversed part from entering a gap between the outer cylindrical section of the stator and the second rotatable roller.

6. A rotatable connector device according to claim 5, wherein the diametrically outer restriction section is located in an area defined between a phantom line passing an axial center of the retainer and the axial center of the second rotatable roller and a tangential line passing the axial center of the retainer and contacting the second rotatable roller.

7. A rotatable connector device according to claim 5 or 6, further comprising an inter-roller restriction section provided on the top surface of the retainer and located between the plurality of first rotatable rollers;
wherein the diametrically inner restriction section and the diametrically outer restriction section are integral with the inter-roller restriction section.

8. A rotatable connector device according to claim 7, wherein the inter-roller restriction section is shaped to be along the second rotatable roller and is located to surround the second rotatable roller.
